(19) Europäisches Patentamt
European Patent Office
Office européen des brevets

(11) **EP 2 502 028 B1**

(12) **EUROPÄISCHE PATENTSCHRIFT**

(45) Veröffentlichungstag und Bekanntmachung des Hinweises auf die Patenterteilung:
**28.08.2013 Patentblatt 2013/35**

(21) Anmeldenummer: 09774827.1

(22) Anmeldetag: **18.11.2009**

(51) Int Cl.:
*G01D 4/00* *(2006.01)*      *G01D 7/10* *(2006.01)*
*G01R 13/02* *(2006.01)*      *G01R 13/34* *(2006.01)*

(86) Internationale Anmeldenummer:
**PCT/EP2009/008409**

(87) Internationale Veröffentlichungsnummer:
**WO 2011/060808 (26.05.2011 Gazette 2011/21)**

(54) **ANZEIGEEINRICHTUNG UND VERFAHREN ZUM ANZEIGEN VON MESSDATEN**

DISPLAY DEVICE AND METHOD FOR DISPLAYING MEASUREMENT DATA

DISPOSITIF D'AFFICHAGE ET PROCÉDÉ PERMETTANT D'AFFICHER DES DONNÉES DE MESURE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**26.09.2012 Patentblatt 2012/39**

(73) Patentinhaber: **Siemens Aktiengesellschaft 80333 München (DE)**

(72) Erfinder: **LANDSGESELL, Frank 90592 Schwarzenbruck (DE)**

(56) Entgegenhaltungen:
**US-A- 5 680 311**

• **Anonymous: "Analog Dual-Standard Waveform Monitor" 11. August 2009 (2009-08-11), XP002577912 Gefunden im Internet: URL:http://www2.tek.com/cmsreplive/psrep/1 4007/2PW_22204_0_2009.08.12.10.21.52_14007 _EN.pdf> [gefunden am 2010-04-07]**

EP 2 502 028 B1

**Beschreibung**

Die Erfindung bezieht sich auf ein Verfahren zum Anzeigen von Messdaten einer Energieübertragungs- und/ oder Energieverteilungsanlage auf einem Bildschirm, wobei die Messdaten in einem Diagramm über der Zeitachse angezeigt werden.

Derartige Anzeigeverfahren werden üblicherweise im Bereich der Schutz- und Leittechnik eingesetzt, um eine Überwachung einer Energieübertragungs- und/oder Energieverteilungsanlage durch Wartungspersonal zu ermöglichen. Ein entsprechendes Anzeigeverfahren wird beispielsweise von der Siemens AG unter dem Produktnamen "SIGUARD" vertrieben.

Der Erfindung liegt die Aufgabe zugrunde, ein Verfahren zum Anzeigen von Messdaten anzugeben, das eine noch komfortablere und noch einfachere Überwachung einer Energieübertragungs-und/oder Energieverteilungsanlage als bisher ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass in einem ersten Diagrammabschnitt des Diagramms Messdaten eines ausgewählten vergangenen Zeitintervalls in einer zeitlich eingefrorenen Darstellung angezeigt werden und in einem zweiten mittelbar oder unmittelbar angrenzenden Diagrammabschnitt des Diagramms Messdaten angezeigt werden, die sich auf die Zeitspanne nach dem im ersten Diagrammabschnitt angezeigten Zeitintervall bis zum jeweils aktuellen Anzeigezeitpunkt beziehen, wobei während der eingefrorenen Darstellung der Messdaten im ersten Diagrammabschnitt aktuelle, neu hinzukommende Messdaten der Energieübertragungs- oder Energieverteilungsanlage dem zweiten Diagrammabschnitt unter Anpassung dessen zeitlicher Skalierung hinzugefügt werden.

Ein wesentlicher Vorteil des erfindungsgemäßen Verfahrens ist darin zu sehen, dass ein Betrachter des auf dem Bildschirm dargestellten Diagramms zwecks Detailanalyse ausgewählte Zeitabschnitte in einem zeitlich eingefrorenen Zustand im Detail analysieren kann, ohne dabei auf Informationen bezüglich der während der Analyse neu eintreffenden Messdaten verzichten zu müssen. Es ist also mit Hilfe des erfindungsgemäßen Anzeigeverfahrens möglich, eine Detailanalyse für ein vergangenes Zeitintervall mit einer Überwachung aktuell eintreffender Messdaten zu verbinden. Mit Hilfe des angezeigten Diagramms ist es somit einfacher als bisher möglich, eine Energieübertragungs- oder Energieverteilungsanlage zu überwachen.

Die Messdaten in dem zweiten Diagrammabschnitt werden vorzugsweise mit einer linearen oder logarithmischen Skalierung angezeigt, da eine Anzeige mit einer solchen Skalierung besonders einfach abzulesen und zu interpretieren ist.

Die Messdaten werden - nach einem Einfrieren der Anzeige in dem ersten Diagrammabschnitt - in dem zweiten Diagrammabschnitt vorzugsweise zunächst linear und nachfolgend logarithmisch angezeigt. Das Umschalten von der linearen Skalierung in die logarithmische Skalierung erfolgt beispielsweise, wenn die Menge der in dem zweiten Diagrammabschnitt angezeigten Messdaten aufgrund des Hinzufügens aktueller Messdaten eine vorgegebene Schwelle überschreitet und eine lineare Skalierung aufgrund der Messdatenfülle schlecht ablesbar wird.

Alternativ oder zusätzlich kann vorgesehen sein, dass im zweiten Diagrammabschnitt nicht mehr alle für die anzuzeigende Zeitspanne zur Verfügung stehenden Messdaten angezeigt werden, sondern nur noch eine Auswahl aller vorhandenen Messdaten. Vorzugsweise wird bei Überschreiten vorgegebener Schwellen nur noch jeder n-te Messwert angezeigt, wobei der Wert für n umso größer gewählt wird, je größer die Anzahl N der Messdaten ist, die für die im zweiten Diagrammabschnitt anzuzeigende Zeitspanne zur Verfügung stehen und angezeigt werden könnten. Vorzugsweise wird der Wert für n als Funktion des Wertes N bestimmt, beispielsweise wie folgt:

$$n = f(N) = Int(N/A) \text{ für } N>A,$$

wobei A einen vorgegebenen Schwellenwert angibt und die Int-Funktion den ganzzahligen Anteil des Quotienten N/A zurückgibt.

Der erste Diagrammabschnitt kann darüber hinaus in Unterabschnitte unterteilt werden, in denen die Messwerte jeweils mit einer individuellen zeitlichen Skalierung angezeigt werden. Eine solche Unterteilung kann die Analyse der Messdaten noch weiter vereinfachen.

Die Erfindung bezieht sich darüber hinaus auf eine Anzeigeeinrichtung mit einem Bildschirm und einer mit dem Bildschirm in Verbindung stehenden Steuereinrichtung, die geeignet ist, ein Anzeigesignal zu erzeugen, mit dem eingangsseitig anliegende Messdaten einer Energieübertragungs- oder Energieverteilungsanlage auf dem Bildschirm angezeigt werden. Erfindungsgemäß ist diesbezüglich vorgesehen, dass die Steuereinrichtung einen Anzeigemodus ermöglicht, bei dem die Messdaten in einem Diagramm über der Zeitachse aufgetragen werden, wobei ein erster Diagrammabschnitt des Diagramms Messdaten in einer zeitlich eingefrorenen Darstellung zeigt und ein zweiter Diagrammabschnitt aktuelle Messdaten zeigt, die sich zeitlich auf die Zeitspanne nach dem im ersten Diagrammabschnitt angezeigten Zeitintervall bis zum jeweils aktuellen Anzeigezeitpunkt beziehen, wobei - während der eingefrorenen Anzeige der Messdaten in dem ersten Diagrammabschnitt - aktuelle neu hinzukommende Messdaten dem zweiten Diagrammabschnitt hinzugefügt werden und dabei dessen zeitliche Skalierung an die jeweils in dem zweiten Zeitabschnitt dargestellte anwachsende Zeitspanne angepasst wird.

Bezüglich der Vorteile der erfindungsgemäßen Anzeigeeinrichtung sei auf die obigen Ausführungen bezüglich der Vorteile des erfindungsgemäßen Verfahrens verwiesen, da die Vorteile des erfindungsgemäßen Verfahrens denen der erfindungsgemäßen Anzeigeeinrichtung im Wesentlichen entsprechen.

Gemäß einer besonders bevorzugten Ausgestaltung der Anzeigeeinrichtung ist vorgesehen, dass die Steuereinrichtung einen weiteren Anzeigemodus bereitstellt, der anders arbeitet und in dem im Falle eines Hinzufügens neuer Messdaten zu dem Diagramm die jeweils ältesten Messdaten aus dem Diagramm entfernt werden und die in dem Diagramm angezeigte Zeitspanne konstant bleibt, wobei die Steuereinrichtung ein Umschalten von dem einen Anzeigemodus in den weiteren Anzeigemodus und umgekehrt ermöglicht.

Die Steuereinrichtung ist bevorzugt derart ausgestaltet, dass sie nach einem Umschalten von dem einen Anzeigemodus in den weiteren Anzeigemodus in dem Diagramm die letzten aktuellen Messdaten für eine vorgegebene Zeitspanne vor dem Umschaltzeitpunkt anzeigt.

Die Erfindung wird nachfolgend anhand von Ausführungsbeispielen näher erläutert; dabei zeigen beispielhaft

Figur 1      ein Ausführungsbeispiel für eine erfindungsgemäße Anzeigeeinrichtung, anhand derer auch das erfindungsgemäße Verfahren beispielhaft erläutert wird,

Figuren 2 und 3      beispielhaft einen Anzeigemodus der Anzeigeeinrichtung gemäß Figur 1, bei der die Anzeige von Messdaten mit einer konstanten zeitlichen Skalierung erfolgt,

Figuren 4 bis 8      beispielhaft einen anderen Anzeigemodus der Anzeigeeinrichtung gemäß Figur 1, bei der ein Diagrammabschnitt ein Zeitintervall in einer zeitlich eingefrorenen Darstellung sowie ein anderer Diagrammabschnitt eine Zeitspanne mit variabler Skalierung zeigt, und

Figur 9      ein weiteres Ausführungsbeispiel für einen Anzeigemodus, bei dem Messdaten mit einer eingefrorenen sowie einer variablen zeitlichen Skalierung angezeigt werden.

Der Übersicht halber werden für identische oder vergleichbare Elemente in den Figuren stets dieselben Bezugszeichen verwendet.

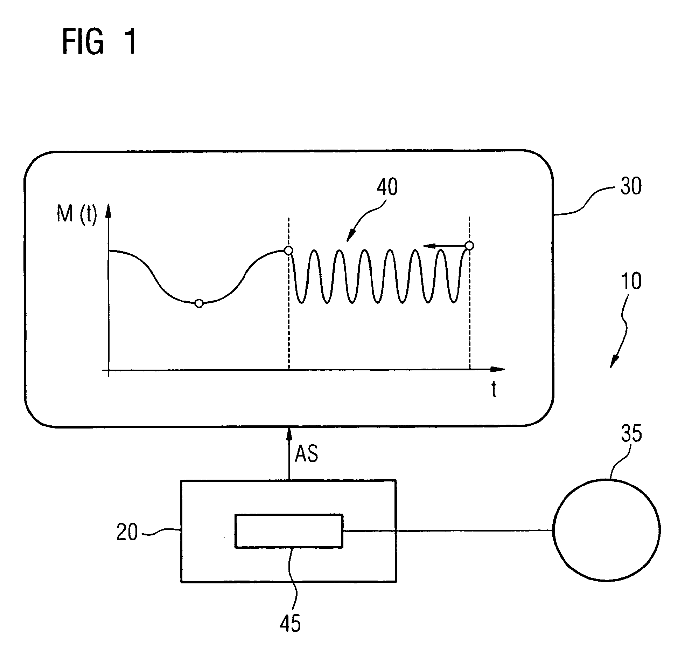

Die Figur 1 zeigt ein Ausführungsbeispiel für eine Anzeigeeinrichtung 10, die mit einer Steuereinrichtung 20 sowie einem Bildschirm 30 ausgestattet ist. Die Steuereinrichtung 20 steht mit einer Energieübertragungs- und/oder Energieverteilungsanlage 35 in Verbindung, die in der Figur 1 nur schematisch durch einen Kreis dargestellt ist. Die Energieübertragungs- und/oder Energieverteilungsanlage ist mit einer Vielzahl an Feld- und/oder Leitgeräten ausgestattet, die Messdaten M(t) erzeugen und zur Steuereinrichtung 20 der Anzeigeeinrichtung 10 übertragen. Bei den Messdaten M(t) kann es sich um unmittelbar aufgenommene Messwerte - wie zum Beispiel Strom- oder Spannungsmesswerte - oder um aus unmittelbar aufgenommenen Messwerten abgeleitete Messwerte - zum Beispiel Widerstandsmesswerte, Leistungsmesswerte, Energiemesswerte, etc. - handeln.

Die Steuereinrichtung 20 wertet die Messdaten M(t) aus und erzeugt ausgangsseitig ein Anzeigesignal AS, das zum Bildschirm 30 übertragen wird, damit dieser die Messdaten M(t) anzeigen kann. Die Anzeige der Messdaten (M(t) erfolgt in einem Diagramm 40, das die Messdaten M(t) über der Zeitachse t aufträgt.

Die Anzeigeeinrichtung 10 weist zumindest zwei unterschiedliche Anzeigemodi auf, nämlich einen Anzeigemodus, bei dem die Messdaten in dem Diagramm 40 über einer Zeitachse mit variabler bzw. dynamisch angepasster Skalierung aufgetragen werden, wobei die angezeigte Zeitspanne anwächst, sowie einen weiteren Anzeigemodus, bei dem die Messdaten in dem Diagramm 40 mit einer konstanten zeitlichen Skalierung angezeigt werden, wobei im Falle eines Hinzufügens neuer Messdaten zu dem Diagramm die jeweils ältesten Messdaten aus dem Diagramm entfernt werden und die in dem Diagramm angezeigte Zeitspanne konstant bleibt. Die Anzeigeeinrichtung 10 ist derart ausgestaltet, dass zwischen den beiden Anzeigemodi benutzerseitig umgeschaltet werden kann.

Um ein Einfrieren der Anzeige auf dem Bildschirm 30 zu ermöglichen und/oder die Anzeige alter Messdaten zu erlauben, weist die Steuereinrichtung 20 vorzugsweise eine Speichereinrichtung 45 zum Puffern und/oder dauerhaften Abspeichern von Messdaten auf.

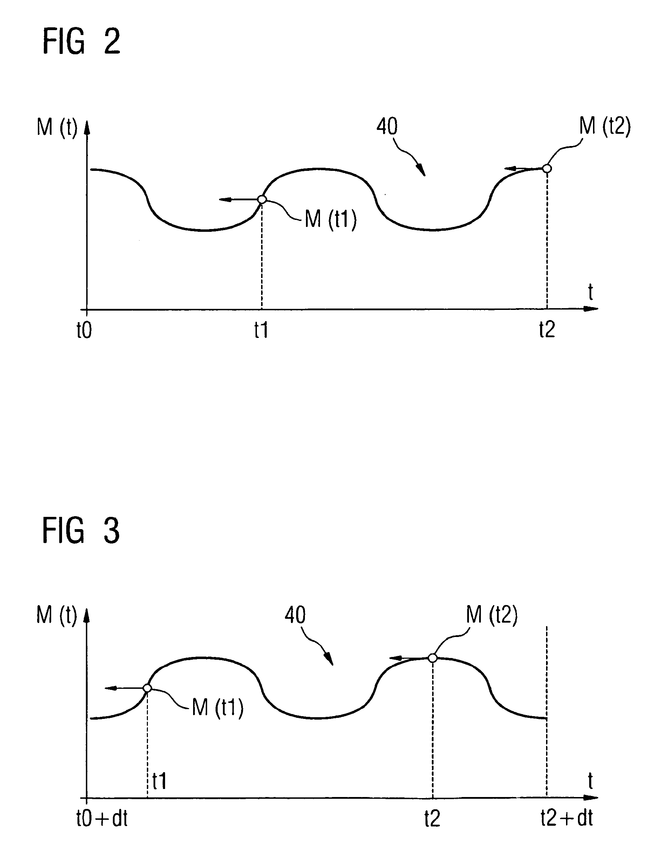

Im Zusammenhang mit den Figuren 2 und 3 soll nachfolgend zunächst der weitere Anzeigemodus erläutert werden, also der Anzeigemodus, bei dem die Anzeige der Messdaten in dem Diagramm 40 mit konstanter zeitlicher Skalierung erfolgt.

In der Figur 2 ist beispielhaft die Anzeige der Messdaten M(t) für den Zeitpunkt t=t2 dargestellt. Beispielhaft markiert sind Messwerte zum Zeitpunkt t1 sowie zum Zeitpunkt t2. Die Messwerte sind mit dem Bezugszeichen M(t1) und M(t2) gekennzeichnet.

Im weiteren zeitlichen Verlauf wird die Steuereinrichtung 20 gemäß Figur 1 von der Energieübertragungs- und/ oder Energieverteilungsanlage 35 weitere Messdaten empfangen, die in dem Diagramm 40 dargestellt werden sollen. Um dies bei konstanter zeitlicher Skalierung zu ermöglichen, werden die in der Figur 2 dargestellten Messdaten nach links verschoben. Dies zeigt beispielhaft die Figur 3.

In der Figur 3 ist die Anzeige der Messdaten M(t) für den Zeitpunkt t2+dt dargestellt. Es lässt sich erkennen, dass die in dem Diagramm 40 dargestellte Zeitspanne sowie damit auch die Skalierung konstant gehalten werden. Demgemäß zeigt das Diagramm 40 gemäß Figur 3 die Zeitspanne zwischen dem Zeitpunkt t0+dt und dem Zeitpunkt t2+dt an.

Auch lässt sich in der Figur 3 erkennen, dass die Messwerte zum Zeitpunkt t1 und t2 jeweils nach links verschoben worden sind. Die entsprechenden Messwerte sind durch kleine Kreise dargestellt. Die Messwerte im Zeitintervall zwischen dem Zeitpunkt t0 und dem Zeitpunkt t0+dt sind demgemäß in der Figur 3 nicht mehr dargestellt, da die in der Figur 3 dargestellte Zeitspanne gerade um das entsprechende Intervall dt verschoben worden ist.

Zusammengefasst lässt sich feststellen, dass die Figuren 2 und 3 einen Anzeigemodus zeigen, bei dem die in dem Diagramm 40 angezeigte Zeitspanne Δt konstant ist und sich wie folgt berechnet:

$$\Delta t = t2 - t0.$$

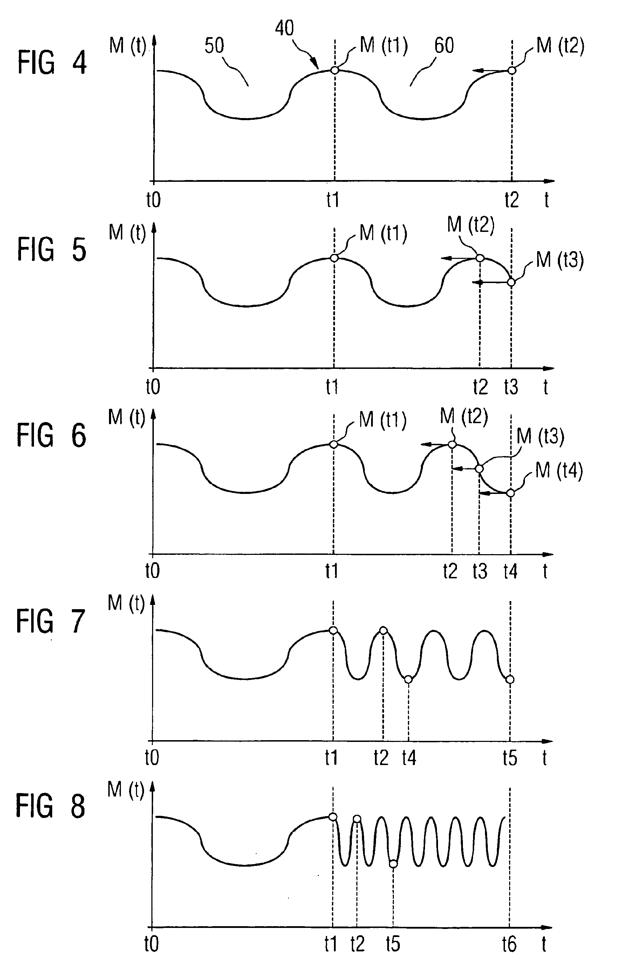

Im Zusammenhang mit den Figuren 4 bis 8 soll beispielhaft der andere Anzeigemodus der Anzeigeeinrichtung 10 gemäß Figur 1 erläutert werden, bei dem eine Anzeige der Messdaten mit variabler zeitlicher Skalierung erfolgt. Dabei wird beispielhaft davon ausgegangen, dass zum Zeitpunkt t=t2, der in der Figur 2 dargestellt ist, ein Umschalten in den anderen Anzeigemodus erfolgt. Zum Zeitpunkt t=t2 entspricht die Anzeige auf dem Bildschirm 30, wie sie die Figur 4 zeigt, also noch der Anzeige gemäß Figur 2.

Im Unterschied zu Figur 2 ist in der Figur 4 zusätzlich die Aufteilung des Diagramms 40 in einen ersten Diagrammabschnitt 50 sowie einen zweiten Diagrammabschnitt 60 markiert. Der erste Diagrammabschnitt 50 stellt in einer zeitlich eingefrorenen Darstellung das Zeitintervall zwischen den Zeitpunkten t0 und t1 dar. Der zweite Diagrammabschnitt 60 stellt die Zeitspanne zwischen t1 und dem jeweiligen Anzeigezeitpunkt t dar. Wie weiter unten ersichtlich wird, wird die zeitliche Skalierung im zweiten Diagrammabschnitt 60 an die jeweils anzuzeigende Zeitspanne angepasst, die Skalierung ist also variabel und wird dynamisch angepasst.

In der Figur 5 ist die Anzeige in dem Diagramm 40 zum Zeitpunkt t=t3 dargestellt. Man erkennt, dass die Anzeige im ersten Diagrammabschnitt 50 unverändert geblieben ist, es wird weiterhin das Zeitintervall zwischen dem Zeitpunkt t0 und dem Zeitpunkt t1 angezeigt. Dementsprechend ist die Lage des Messwertes M(t1) unverändert.

Im Unterschied dazu ist die zeitliche Skalierung in dem zweiten Diagrammabschnitt 60 an die anzuzeigende Zeitspanne angepasst worden; denn aufgrund der anzuzeigenden weiteren Messdaten, die im Zeitraum zwischen dem Zeitpunkt t2 und dem aktuellen Anzeigezeitpunkt t3 von der Energieübertragungs-und/oder Energieverteilungsanlage geliefert worden sind, müssen die in dem zweiten Diagrammabschnitt 60 dargestellten Messwerte zusammengeschoben bzw. gestaucht werden, um eine Anzeige der Messdaten für die Zeitspanne zwischen den Zeitpunkten t1 und t3 zu ermöglichen. So erkennt man in der Figur 5, dass der Messwert M(t2) nun nicht mehr am rechten Rand des Diagramms 40 dargestellt ist, sondern stattdessen nach links gerückt ist. Dies ermöglicht zusätzlich die Anzeige des Messwertes M(t3), der sich auf den aktuellen Zeitpunkt t3 bezieht. Der Graph wird im zweiten Diagrammabschnitt 60 also anschaulich beschrieben wie eine Feder gestaucht.

Die Figur 6 zeigt beispielhaft die Anzeige auf dem Bildschirm 30 zum Zeitpunkt t4. Auch zu diesem Zeitpunkt wird in dem ersten Diagrammabschnitt 50 weiterhin das Zeitintervall zwischen dem Zeitpunkt t0 und dem Zeitpunkt t1 in einer zeitlich eingefrorenen Darstellung angezeigt. Der in der Figur 6 rechts dargestellte zweite Diagrammabschnitt 60 stellt mit einer entsprechenden zeitlich angepassten Skalierung nun die Zeitspanne zwischen dem Zeitpunkt t1 und dem aktuellen Anzeigezeitpunkt t4 an. Um dies zu ermöglichen, ist der Messwert M(t2) sowie der Messwert M(t3) in dem Diagramm 40 nach links verschoben worden, um das zusätzliche Anzeigen der Messwerte des Zeitintervalls zwischen dem Zeitpunkt t3 und dem aktuellen Anzeigezeitpunkt t4 zu ermöglichen.

Die Figur 7 zeigt das Diagramm 40 zum Anzeigezeitpunkt t5. Es lässt sich erkennen, dass der Verlauf der Messdaten im zweiten Diagrammabschnitt noch weiter zusammengeschoben worden ist, um die Anzeige aller Messwerte, die zwischen dem Zeitpunkt t1 und dem aktuellen Anzeigezeitpunkt t5 von der Energieübertragungs- und/oder Energieverteilungsanlage geliefert worden sind, anzeigen zu können.

Die Figur 8 zeigt in entsprechender Weise die Darstellung der Messdaten M(t) zu einem noch späteren Zeitpunkt t6.

Insbesondere die Figur 8 lässt gut erkennen, dass bei einer sehr langen zeitlich eingefrorenen Darstellung der Messdaten im ersten Diagrammabschnitt die Auswertbarkeit des zweiten Diagrammabschnitts 60 leidet, weil dort schlicht zu viele Messdaten angezeigt werden müssten. Um hier Abhilfe zu schaffen, kann bei Erreichen vorgegebener Schwellen eine Anpassung der Darstellung im zweiten Diagrammabschnitt 60 vorgesehen werden: Beispielsweise kann vorgesehen sein, dass die Zeitachse im zweiten Diagrammabschnitt 60 anders als linear, beispielsweise logarithmisch, aufgeteilt wird, um die Ablesbarkeit und Auswertbarkeit der Anzeige durch Wartungspersonal zu vereinfachen. Alternativ und/ oder zusätzlich kann vorgesehen sein, dass nicht mehr alle Messdaten M(t) der im zweiten Diagrammabschnitt 60 anzuzeigenden Zeitspanne angezeigt werden, sondern nur noch eine Auswahl aller vorhandenen Messdaten: Beispielsweise kann vorgesehen sein, dass nur noch jeder zehnte, hundertste oder tausendste Messwert angezeigt wird, und nicht mehr jeder einzelne.

Wird von dem Anzeigemodus mit eingefrorener Darstellung, wie sie in den Figuren 4 bis 8 gezeigt ist, von einem Benutzer der Anzeigeeinrichtung wieder in die Darstellung gemäß den Figuren 2 und 3 umgeschaltet, so kann der gestauchte rechte Graph im zweiten Diagrammabschnitt 60 einfach freigegeben werden, so dass er sich entspannt; es existiert dann wieder lediglich eine einzige Zeitachse, wie dies im Zusammenhang mit den Figuren 2 und 3 erläutert worden ist.

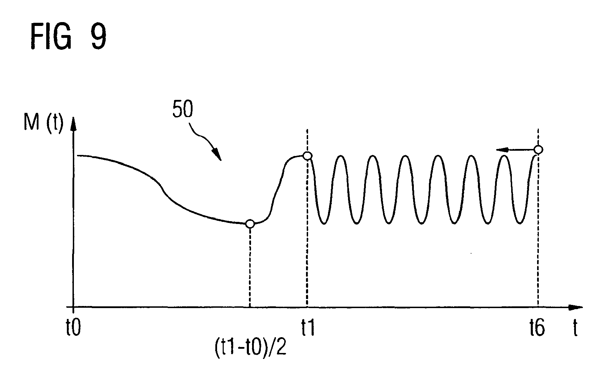

In der Figur 9 ist beispielhaft ein Ausführungsbeispiel für eine Anzeige auf dem Bildschirm dargestellt, bei der im ersten Diagrammabschnitt 50 die eingefrorene Darstellung der Messdaten mit zwei unterschiedlichen zeitlichen Skalierungen erfolgt. So lässt sich in der Figur 9 erkennen, dass die Messdaten in dem ersten Zeitintervall zwischen dem Zeitpunkt t0 und (t1-t0)/2 mit einer anderen Skalierung dargestellt sind als die Messdaten im zweiten Teilabschnitt zwischen dem Zeitpunkt (t1-t0)/2 und dem Zeitpunkt t1. Bei der Anzeigevariante gemäß Figur 9 werden in dem Diagramm 40 also beispielsweise drei unterschiedliche Skalierungen verwendet, nämlich zwei unterschiedliche zeitlich eingefrorene Skalierungen sowie eine zeitlich variable bzw. automatisch angepasste Skalierung.

Vorzugsweise ist die Anzeigeeinrichtung derart ausgestaltet, dass die Grenzen des bzw. der eingefrorenen bzw. statischen Bereiche, also die des ersten Diagrammabschnitts 50, benutzergesteuert in eine Richtung oder in beide Richtungen verschoben werden können, um die Größe und/oder die zeitliche Lage des ersten Diagrammabschnitts 50 zu verändern und die Analyse der Messdaten durch Wartungspersonal zu vereinfachen.

Bezugszeichenliste

| 10 | Anzeigeeinrichtung |
| 20 | Steuereinrichtung |
| 30 | Bildschirm |
| 35 | Energieverteilungsanlage |
| 40 | Diagramm |
| 45 | Speichereinrichtung |
| 50 | Diagrammabschnitt |
| 60 | Diagrammabschnitt |

| AS | Anzeigesignal |
| M(t) | Messdaten |
| M(t1) | Messwert |
| M(t2) | Messwert |
| M(t3) | Messwert |
| t | Zeitachse |
| t0 | Zeitpunkt |
| t1 | Zeitpunkt |
| t2 | Zeitpunkt |
| t3 | Zeitpunkt |
| t4 | Zeitpunkt |
| t5 | Zeitpunkt |
| t6 | Zeitpunkt |
| t2+dt | Zeitpunkt |
| t0+dt | Zeitpunkt |
| $\Delta t$ | Zeitspanne |
| t=t2 | Zeitpunkt |
| t=t3 | Zeitpunkt |
| (t1-t0)/2 | Zeitpunkt |

**EP 2 502 028 B1**

**Patentansprüche**

1. Verfahren zum Anzeigen von Messdaten (M(t)) einer Energieübertragungsoder Energieverteilungsanlage (35) auf einem Bildschirm (30), wobei die Messdaten in einem Diagramm (40) über der Zeitachse (t) angezeigt werden, wobei

   - in einem ersten Diagrammabschnitt (50) des Diagramms Messdaten eines ausgewählten vergangenen Zeitintervalls in einer zeitlich eingefrorenen Darstellung angezeigt werden und
   - in einem zweiten mittelbar oder unmittelbar angrenzenden Diagrammabschnitt (60) des Diagramms Messdaten angezeigt werden, **dadurch gekennzeichnet, dass**
   - in dem zweiten mittelbar oder unmittelbar angrenzenden Diagrammabschnitt (60) des Diagramms Messdaten angezeigt werden die sich auf die Zeitspanne nach dem im ersten Diagrammabschnitt angezeigten Zeitintervall bis zum jeweils aktuellen Anzeigezeitpunkt beziehen, wobei
   - während der eingefrorenen Darstellung der Messdaten im ersten Diagrammabschnitt aktuelle, neu hinzukommende Messdaten der Energieübertragungsoder Energieverteilungsanlage dem zweiten Diagrammabschnitt unter Anpassung dessen zeitlicher Skalierung hinzugefügt werden.

2. Verfahren nach Anspruch 1,
   **dadurch gekennzeichnet, dass** die Messdaten in dem zweiten Diagrammabschnitt mit einer linearen Skalierung angezeigt werden.

3. Verfahren nach Anspruch 1,
   **dadurch gekennzeichnet, dass** die Messdaten in dem zweiten Diagrammabschnitt mit einer logarithmischen Skalierung angezeigt werden.

4. Verfahren nach Anspruch 1,
   **dadurch gekennzeichnet, dass** die Messdaten - nach einem Einfrieren der Anzeige in dem ersten Diagrammabschnitt - in dem zweiten Diagrammabschnitt zunächst linear und nachfolgend logarithmisch angezeigt werden.

5. Verfahren nach Anspruch 4,
   **dadurch gekennzeichnet, dass** das Umschalten von der linearen Skalierung in die logarithmische Skalierung erfolgt, wenn die Menge der in dem zweiten Diagrammabschnitt angezeigten Messdaten aufgrund des Hinzufügens aktueller Messdaten eine vorgegebene Schwelle überschreitet.

6. Verfahren nach einem der voranstehenden Ansprüche,
   **dadurch gekennzeichnet, dass** der erste Diagrammabschnitt in zumindest zwei Unterabschnitte unterteilt wird, in denen die Messwerte jeweils mit einer individuellen zeitlichen Skalierung angezeigt werden.

7. Anzeigeeinrichtung (10) mit einem Bildschirm (30) und einer mit dem Bildschirm in Verbindung stehenden Steuereinrichtung (20), die geeignet ist, ein Anzeigesignal (AS) zu erzeugen, mit dem eingangsseitig anliegende Messdaten (M(t)) einer Energieübertragungsoder Energieverteilungsanlage (35) auf dem Bildschirm angezeigt werden, wobei

   - die Steuereinrichtung einen Anzeigemodus ermöglicht, bei dem die Messdaten in einem Diagramm (40) über der Zeitachse (t) aufgetragen werden, wobei ein erster Diagrammabschnitt (50) des Diagramms Messdaten in einer zeitlich eingefrorenen Darstellung zeigt und ein zweiter Diagrammabschnitt aktuelle Messdaten zeigt, dadurchgekennzeichnet, dass
   - die aktuelle Messdaten die der zweite Diagrammabschnitt zeigt sich zeitlich auf die Zeitspanne nach dem im ersten Diagrammabschnitt ange-zeigten Zeitintervall bis zum jeweils aktuellen Anzeigezeitpunkt beziehen,
   - während der eingefrorenen Anzeige der Messdaten in dem ersten Diagrammabschnitt - aktuelle neu hinzukommende Messdaten dem zweiten Diagrammabschnitt (60) hinzugefügt werden und dabei dessen zeitliche Skalierung an die jeweils in dem zweiten Zeitabschnitt dargestellte anwachsende Zeitspanne angepasst wird.

8. Anzeigeeinrichtung nach Anspruch 7,
   **dadurch gekennzeichnet, dass**

   - die Steuereinrichtung einen weiteren Anzeigemodus bereitstellt, in dem im Falle eines Hinzufügens neuer Messdaten zu dem Diagramm die jeweils ältesten Messdaten aus dem Diagramm entfernt werden und die in dem Diagramm angezeigte Zeitspanne konstant bleibt,
   - wobei die Steuereinrichtung ein Umschalten von dem einen Anzeigemodus in den weiteren Anzeigemodus und umgekehrt ermöglicht.

9. Anzeigeeinrichtung nach Anspruch 8,
**dadurch gekennzeichnet, dass** die Steuereinrichtung derart ausgestaltet ist, dass sie nach einem Umschalten von dem einen Anzeigemodus in den weiteren Anzeigemodus in dem Diagramm die letzten aktuellen Messdaten für eine vorgegebene Zeitspanne vor dem Umschaltzeitpunkt anzeigt.

10. Anzeigeeinrichtung nach einem der voranstehenden Ansprüche 7-9,
**dadurch gekennzeichnet, dass** die Steuereinrichtung geeignet ist, die Messdaten - nach einem Einfrieren der Anzeige in dem ersten Diagrammabschnitt - in dem zweiten Diagrammabschnitt zunächst linear und nachfolgend logarithmisch anzuzeigen.

**Claims**

1. Method for displaying measurement data (M(t)) of an energy transmission or energy distribution system (35) on a screen (30), the measurement data being displayed in a graph (40) over the time axis (t), wherein

    - in a first graph segment (50) of the graph, measurement data of a selected preceding time interval are displayed, in a temporally frozen illustration, and
    - in a second indirectly or directly adjoining graph segment (60) of the graph, measurement data are displayed
    **characterized in that**
    - in the second indirectly or directly adjoining graph segment (60) of the graph, measurement data are displayed which relate to the time span following the time interval displayed in the first graph segment up to the respectively current display time, wherein
    - during the frozen representation of the measurement data in the first graph segment, current, newly arriving measurement data of the energy transmission or energy distribution system are added to the second graph segment whilst matching the timescale thereof.

2. Method according to Claim 1,
**characterized in that**
the measurement data in the second graph segment are displayed with a linear scale.

3. Method according to Claim 1,
**characterized in that**
the measurement data in the second graph segment are displayed with a logarithmic scale.

4. Method according to Claim 1,
**characterized in that**
the measurement data, once the display in the first graph segment has been frozen, are displayed in the second graph segment first linearly and then logarithmically.

5. Method according to Claim 4,
**characterized in that**
the transition from the linear scale to the logarithmic scale takes place when the amount of measurement data displayed in the second graph segment exceeds a predetermined threshold as a result of the addition of current measurement data.

6. Method according to one of the preceding claims,
**characterized in that**
the first graph segment is divided into at least two subsegments, in which the measurement values are each displayed with an individual timescale.

7. Display device (10) with a screen (30) and a control device (20), which is connected to the screen and is suitable for generating a display signal (AS) with which measurement data (M(t)) of an energy transmission or energy distribution system (35), said measurement data being present on the input side, are displayed on the screen, wherein

    - the control device allows a display mode in which the measurement data are plotted in a graph (40) over the time axis (t), a first graph segment (50) of the graph showing measurement data in a temporally frozen illustration, and a second graph segment showing current measurement data, **characterized in that**

- the current measurement data which are shown by the second graph segment, relate temporally to the time span following the time interval displayed in the first graph segment up to the respectively current display time,
- during the frozen display of the measurement data in the first graph segment, current, newly arriving measurement data are added to the second graph segment (60) and, in the process, the timescale thereof is matched to the respective increasing time span illustrated in the second time segment.

**8.** Display device according to Claim 7,
**characterized in that**

- the control device provides a further display mode, in which, in the case of new measurement data being added to the graph, the respectively oldest measurement data are removed from the graph and the time span displayed in the graph remains constant,
- wherein the control device enables a transition from one display mode to the other display mode, and vice versa.

**9.** Display device according to Claim 8,
**characterized in that**
the control device is configured in such a way that, following a transition from one display mode to the further display mode, the last current measurement data for a predetermined time span prior to the transition time are displayed in the graph.

**10.** Display device according to one of the preceding Claims 7 - 9,
**characterized in that**
the control device is suitable for displaying the measurement data, once the display in the first graph segment has been frozen, in the second graph segment first linearly and then logarithmically.

**Revendications**

**1.** Procédé d'affichage de données (M(t)) de mesure d'une installation (35) de transmission d'énergie ou de distribution d'énergie sur un écran (30), les données de mesure étant affichées suivant un graphique (40) en fonction de l'axe (t) du temps, dans lequel

- dans une première partie (50) du graphique, on affiche des données de mesure d'un intervalle de temps passé sélectionné suivant une représentation gelée dans le temps et
- dans une deuxième partie (60) du graphique, immédiatement voisine ou non, on affiche des données de mesure, **caractérisé en ce que**
- dans la deuxième partie (60) du graphique, immédiatement voisine ou non, on affiche des données de mesure qui se rapportent au laps de temps, après l'intervalle de temps affiché dans la première partie du graphique jusqu'à l'instant d'affichage présent, dans lequel
- pendant la représentation gelée de données de mesure dans la première partie du graphique, on ajoute des données de mesure, présentes et arrivant nouvellement, de l'installation de transmission d'énergie ou de l'installation de distribution d'énergie à la deuxième partie du graphique en adaptant sa mise à l'échelle temporelle.

**2.** Procédé suivant la revendication 1,
**caractérisé en ce que** l'on affiche les données de mesure dans la deuxième partie du graphique avec une mise à l'échelle linéaire.

**3.** Procédé suivant la revendication 1,
**caractérisé en ce que** l'on affiche les données de mesure dans la deuxième partie du graphique avec une mise à l'échelle logarithmique.

**4.** Procédé suivant la revendication 1,
**caractérisé en ce que** l'on affiche les données de mesure, après un gel de l'affichage dans la première partie du graphique, dans la deuxième partie du graphique, d'abord linéairement et ensuite logarithmiquement.

**5.** Procédé suivant la revendication 4,

**caractérisé en ce que** l'on effectue le passage de la mise à l'échelle linéaire à la mise à l'échelle logarithmique si la quantité des données de mesure affichées dans la deuxième partie du graphique dépasse, en raison de l'adjonction de données de mesure présente, un seuil prescrit.

6. Procédé suivant l'une des revendications précédentes,
**caractérisé en ce que** l'on subdivise la première partie du graphique en au moins deux sous-parties, dans lesquelles on affiche les valeurs de mesure respectivement avec une mise à l'échelle temporelle individuelle.

7. Dispositif (10) d'affichage comprenant un écran (30) et un dispositif (20) de commande, qui est en liaison avec l'écran et qui est propre à produire un signal (AS) d'affichage, par lequel des données (M(t)) de mesure, se trouvant du côté de l'entrée d'une installation (35) de transmission d'énergie ou de distribution d'énergie, sont affichées sur l'écran, dans lequel

   - le dispositif de commande rend possible un mode d'affichage, dans lequel les données de mesure sont portées dans un graphique (40) en fonction de l'axe (t) du temps, une première partie (50) du graphique présentant des données de mesure dans une représentation gelée dans le temps, et une deuxième partie du graphique des données de mesure présentes, **caractérisé en ce que**
   - les données de mesure présentes de la deuxième partie du graphique se rapportent au laps de temps après l'intervalle de temps affiché dans la première partie du graphique jusqu'à l'instant d'affichage présent,
   - pendant l'affichage gelé des données de mesure dans la première partie du graphique, des données de mesure présentes et arrivant nouvellement, sont ajoutées à la deuxième partie (60) du graphique et sa mise à l'échelle temporelle est adapté au laps de temps croissant représenté respectivement dans la deuxième partie de temps.

8. Dispositif d'affichage suivant la revendication 7, **caractérisé en ce que**

   - le dispositif de commande met à disposition un autre mode d'affichage, dans lequel, si l'on ajoute de nouvelles données de mesure au graphique, les données de mesure les plus anciennes sont éliminées du graphique et le laps de temps, affiché dans le graphique, reste constant,
   - dans lequel le dispositif de commande rend possible une commutation de l'un des modes d'affichage à l'autre et inversement.

9. Dispositif d'affichage suivant la revendication 8, **caractérisé en ce que**
le dispositif de commande est constitué de manière à afficher, après une commutation de l'un des modes d'affichage à l'autre, dans le graphique, les données de mesure présentes les dernières pendant un laps de temps prescrit avant l'instant de commutation.

10. Dispositif d'affichage suivant l'une des revendications précédentes 7 à 9,
**caractérisé en ce que**
le dispositif de commande est propre à afficher les données de mesure, après un gel de l'affichage dans la première partie du graphique, dans la deuxième partie du graphique, d'abord linéairement et ensuite logarithmiquement.

FIG 1

## FIG 2

## FIG 3

FIG 4

FIG 5

FIG 6

FIG 7

FIG 8

EP 2 502 028 B1

## FIG 9

13